# EUROPEAN PATENT SPECIFICATION

(11) **EP 0 757 642 B1**
(45) Date of publication and mention of the grant of the patent: **16.06.1999**
(21) Application number: 95907113.5
(22) Date of filing: 18.01.1995
(51) Int. Cl.: B62D 25/16

(54) **FENDER FOR COOLING TIRES AND BRAKES AND TO CONTROL SPRAY**
KOTFLÜGEL ZUR KÜHLUNG VON REIFEN UND BREMSEN UND ZUR WASSERSPRITZKONTROLLE
GARDE-BOUE POUR REFROIDIR PNEUS ET FREINS ET REDUIRE LES PROJECTIONS

(43) Date of publication of application: 12.02.1997
(73) Proprietor: Air Fenders Ltd., New Brunswick E0E 1J0 (CA); BECKER, John H., Sumter, SC 29150 (US)
(72) Inventor: BECKER, John, H., Sumter, SC 29150 (US)
(74) Representative: Bankes, Stephen Charles Digby
(86) International application number: IB9500071
(87) International publication number: WO9622215

(56) References cited:
- WO-A-90/01442
- CH-A- 175 839
- US-A- 5 100 177

## Description

This invention relates to a fender for a road vehicle.

Public highways provide a means whereby millions of trucks-trailer transports and the like are freight carriers and move a majority of cargo and commodities from one point to another.

There is no suitable device installed over or around the wheels of these transports to prevent the generation and dispersement of finely divided water streams or snow mists during a storm, which in turn are thrown sideways into the path and windshields of vehicles using the passing lane (or vehicles being passed). As a result thousands of highway deaths occur each year and unlimited risks are taken by these motorists to themselves as well as others in the immediate vicinity. (Highway safety reports 40,000 deaths occur each year in the USA).

The present invention is directed to a fender design which serves multiple purposes. One object is to cool the tyres and brake assemblies. When the carriers are not travelling under rainy conditions and are travelling in warm to hot climates, the tyres tend to heat excessively, resulting in reduced tyre life. For example, if ambient temperature is 35°C (95°F), the temperature of the tyre can be as high as 71°C (160°F) Further, under these conditions, the brake assemblies are also at a relatively higher elevated temperature and do not function as effectively as they would at ambient temperature. Accordingly, the present invention embodies a fender design which cools the tyres and brake assemblies when the tyres are operating at relatively hot ambient temperatures.

Another object is to reduce or eliminate the spray generated by the rotating tyres under wet conditions.

It is believed that the closest prior art is best exemplified by US-A-4,858,941 issued August 22, 1989 and US-A-5,100,177 issued March 31, 1992. The preamble to claim 1 is based on the latter. These documents teach fender designs which partially encase the rotating wheels of a moving vehicle and comprise a front plate with openings and/or a top plate and/or a back plate having either openings or vanes and optionally a side plate having louvered openings. Also relevant is Italian Patent 473134 which teaches louvered openings on a fender wall.

In the design of my original fenders, the primary intent was to prevent or inhibit the spray which would be cast up and laterally outward by the rotating wheels when traveling under rainy conditions. A subsidiary aim or objective of the prior fenders was to cool the tires and brake assemblies areas to enhance the life of the tires and brake assemblies.

Although my prior designs were generally satisfactory for the then intended primary objective, namely reducing or eliminating spray, they were not fully effective for either controlling the spray or for cooling the rotating tire and brake assembly.

With my prior fender designs, it was found that under certain road conditions, namely moderate to heavy rains and low to moderate speeds, that the force of the water spray centrifugally cast from the front upper quadrant of the rotating tire was so great that it was cast through the openings in the forward portion of the fender with the result that the spray was not minimized or inhibited as expected.

Further, it was found that only the forward portion of the fender was fully effective in both cooling the forward portions of the tire and brake assembly. Analysis of the fluid flow characteristics of the air flow within the control zone defined by the fender confirmed that there was little or no effective cooling action on the rearward portion of the tire or brake assembly. By control zone is meant the area defined by the inner surface of the fender and the portion of the rotating tire within the fender and the outer surface of the brake assembly.

The present invention consists in a fender which comprises a generally planar leading section spaced apart from and extending generally across the leading upper quadrant of a tyre; a plurality of blades formed in the leading section, and spaced apart to define flow passages therebetween, the blades comprising outer surfaces and concave inner surfaces spaced apart from the rotating tyre, each blade having a lower part and an upper part, characterised in that the outer surfaces have a parabolic shape, defining therebetween flow paths of diminishing cross section, the lower parts of the blades are directed downwards and backwards towards the tyre, and the upper part of the blades are directed upwards and backwards towards the tyre, such that spray, cast forwardly from the rotating tyre in the region adjacent the leading section is both directed back toward the tyre and downwardly and collected by the inner surfaces and subsequently discharged.

The blades control the air flow and collect and control the spray contacting the inner surface of the blades. The opposed surfaces of adjacent blades define a flow path which ensures that the velocity of the air flowing therethrough is greater than the force of the spray cast from the rotating tyre. The spray cast from the rotating tyre is not cast through the openings under normal operating conditions. The concave inner surface of the blade terminates in a baffle. The spray cast onto the inner surface coalesces, is sheeted off the edge of the baffle and ultimately is discharged inwardly and downwardly from the fender.

In a preferred embodiment of the invention, an enlarged scoop section is formed on the upper leading portion of the leading section of the fender. In a preferred embodiment, with a pair of fenders, this scoop portion can be used on one or both fenders.

The fender may be combined with a side shield comprising means to maintain the shield in spaced apart relationship from the rotating tyre, the shield lying in a plane substantially perpendicular to the axis of the rotating tyre; and a plurality of louvres formed in the shield, comprising at least a leading louvre and a trailing louvre, the louvres being non-uniformly proportioned such that the rate of the air discharged from the louvres is substantially equal to ensure uniform distribution of air flowing into the tyre and associated brake assembly. The side shield is designed to ensure that substantially the upper half of the tyre and brake assembly is uniformly contacted by cooling air streams. This results in longer tyre life and longer life for brake assemblies. Further, it also results in much more efficient control of the spray cast by the rotating wheels than with our prior designs.

Tractor trailers, including the spatial relationship between the wheels and the carriages which they support, assume many configurations. There are what is referred to a dry box trailers (vans) in which when loaded the carriage may only be 76 to 102 mm (3 to 4 inches) above the top of the rotating tyres. There are flat bed trailers where there is usually a substantial clearance between the top of the tyre and the underside of the carriage even when fully loaded. There are moving vans (trailers) where typically the tire rotates within a wheel well formed within the carriage of the van or busses. There are also trailers which are in essence tanks supported on a carrier for transporting gas, oil, etc. Because of all these various configurations, one or all aspects of my invention may be used in combination with any of these trailers. That is, embodiments of only the leading section or the leading section and the side wall can be used alone or in combination with or without a top which top in and of itself may or may not have an air scoop formed therein.

Preferred embodiments of the invention will now be described with reference to the accompanying drawings wherein :
Fig. 1 is a perspective view of a fender embodying the invention for a single axle wheel;
Fig. 2 is an exploded view of the fender;
Fig. 3 is a side schematic illustration taken along lines 3-3 of Fig. 2;
Fig. 4 is a plan view of a fender of Fig. 1;
Fig. 5 is a perspective view of the side wall rotated out of position;
Fig. 6 is a perspective view of front and rear fenders for double axle wheels embodying the invention;
Fig. 7 is a perspective view of an alternative embodiment of the invention employing an air inlet scoop;
Fig. 8 is a side schematic of a leading section of a fender with blades arrayed in uniform relationship; and
Fig. 9 is a front schematic of a leading section of a fender with blades arrayed in non-parallel relationship.

The invention will be described with reference to the left wheels of single and double axle tractors. The structures for the right wheels for the single and double axle vehicles are simply mirror images thereof.

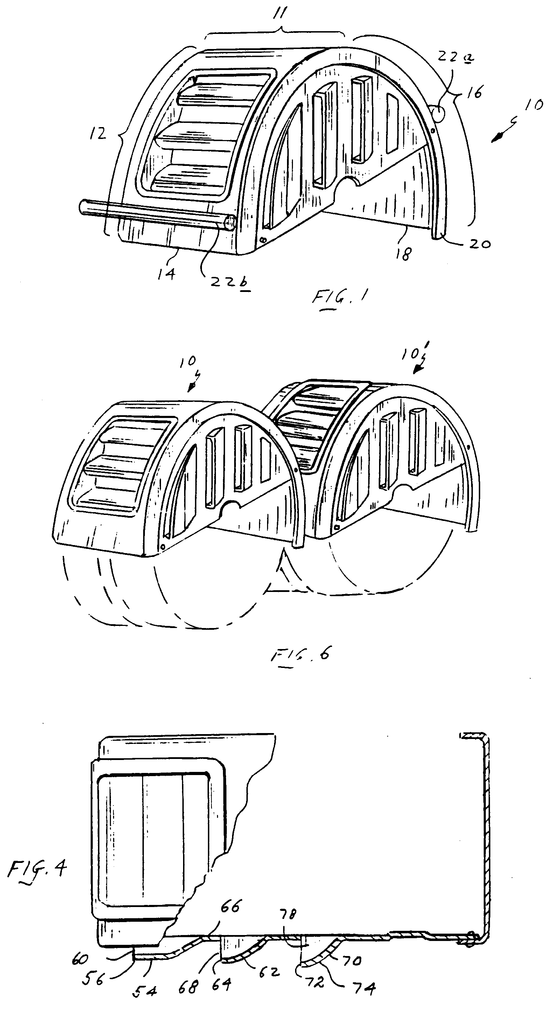

Referring to Fig. 1, a fender is shown generally at 10 and comprises a leading section 12 having a leading edge 14, a top section 11 and a trailing section 16 having a trailing edge 18. The fender also includes a side edge 20 terminating in a U-shaped recess and mounting brackets 22a and 22b which are welded or otherwise secured to the fender 10. The mounting brackets are bolted to the chassis in any suitable manner.

Referring to Fig. 2, the leading section 12 is characterized by an opening 24 in which is received an air scoop 26. The air scoop 26 comprises a substantially rectangular frame 28 having a lip 30 extending outwardly therefrom. Secured in the frame are three horizontal blades spaced in parallel, spaced apart relationship 32a, 32b and 32c respectively. These blades define openings 34a, 34b and 34c, see Fig. 2. The air scoop 26 is secured to the fender 10 by bolting (or otherwise fixing) the lip 30 of the frame to the leading section 12 of the fender.

Referring to Fig. 3, the blades 32a, 32b and 32c of the air scoop 26 are shown more clearly. The blades are parabolic-shaped and comprise outer surfaces 36a, 36b and 36c and inner surfaces 40a, 40b and 40c. The blade openings 34a, 34b and 34c are non-uniform. The opening 34a is smaller than the openings 34b and 34c. Specifically, the openings are approximately 25, 32 and 38 mm(1" 1 1/4", 1 1/2") respectively. The widths of the blades range from 35.5 to 46 cm (14" to 18"). The shape of the blades shown in Fig. 3 correspond to a working example. This spacing ensures a greater air flow in the upper quadrant of the rotating tire. The air flowing over and through the opposed curved surfaces, i.e. through the openings, has an increased velocity compared to flowing over and through flat surfaces. The spray is shown in block arrows and the air flow is shown in linear arrows. This configuration in combination with the top fender or underside of a carriage and a side shield (to be described) pulls a partial vacuum within the fender (leading section, top and side shield) and results in the air carrying moisture exiting the fender at the rear of the fender.

Referring to Figs. 2 and 4, a side shield 42 is shown and comprises a wall 44 and an upper edge 46 which terminates in an offset lip 48. The side shield 42 includes a bottom edge 50. The offset lip 48 is adapted to be received in the U-shaped recess of the edge 20. The lip 48 is out away at its leading edge at 52.

An upstream louver 54 extends outwardly from the side wall 44 and the louver 54 includes a leading edge 56, and a side wall 58 which define a slot-like aperture 60. Similarly, an intermediate louver 62 extends outwardly from the side wall 44 and includes a leading edge 64 and a side wall 66 which define a slot-like aperture 68. A downstream louver 70 extends outwardly from the side wall 44 and includes a leading edge 72, a side wall 74 which define a slot-like aperture 78. The aperture 68 is greater than aperture 60 and the aperture 78 is greater than the aperture 68. The side louvers are spaced so as to direct the incoming air into the wheel rim and onto the brake drums behind the rim.

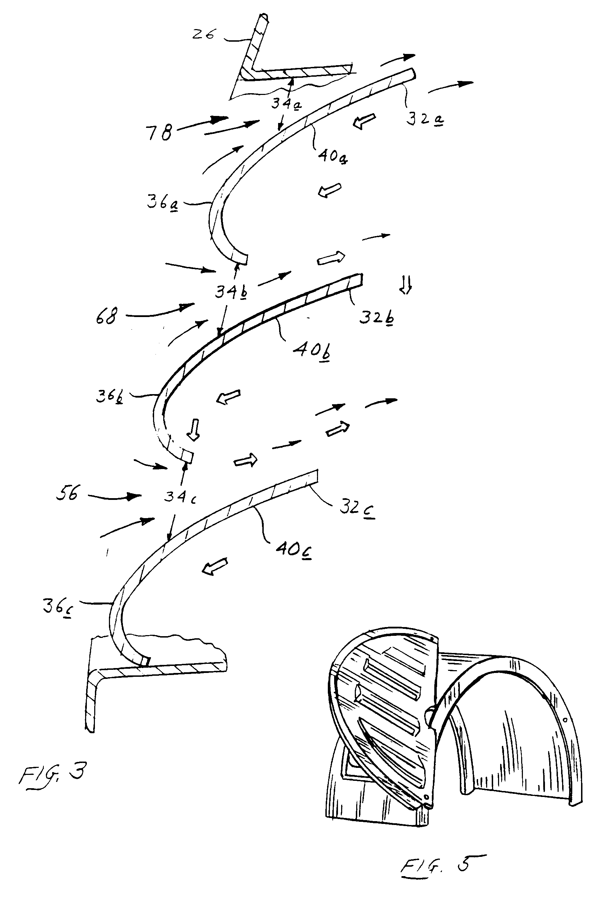

Referring to Figs. 2 and 5, as shown, a spring loaded rod 80 together with an associated spring 82 is secured to the inside surface inner edge 20 of the front fender 10. Secured to the inside of the side shield 42 is a strap 84. The end of the spring loaded rod 80 is journaled to the side shield 42 at 86. The side shield 42 is secured in place by the lip 48 being received in the edge 20 and being locked in place by a cylinder lock 88. When it is necessary to inspect the tire for pressure, tire tread, lug tightness, etc., the lock 88 is released, the side shield rotated downwardly and then moved slightly outwardly from the fender. The spring 82 allows for this flexibility. The side shield is then rotated upwardly, as shown in Fig. 5, to provide access to the tire. The cutaway of the lip 48 at 52 allows for the necessary clearance.

In the operation of the invention, referring to Fig. 3, the air flows through the air scoop 26 and into the control zone, contacting the rotating tire. As previously described, the spray is controlled and directed to the trailing section of the fender. The spray is not cast back through the scoop from the rotating tire. The air also flows through the apertures 60, 68 and 78 in the side shield 42 and is discharged onto the rotating tire and onto the brake assembly. In a preferred embodiment, the apertures are sized in a ratio of approximately 25:32:38mm (1", 1 1/4", 1 1/2") front to back to ensure uniform flow of air into the control zone and onto the rotating tire and the brake assembly. Depending upon the size of the tire with which the fender is used and the number and configuration of openings, various ratios among the apertures will be well within the skill of the art.

In tests conducted with the fender of the invention, if the vehicle (fender) is travelling at 105 km/h (95 feet per second, 65 mph), the speed at which the air exits the fender at the trailing edge 18 is about 170 km/h (154 feet per second). With earlier fender designs, the centrifugal force of the spray being cast from the rotating wheel actually caused the spray to pass through the openings in the leading portion of the fender. Therefore, as shown in Fig. 3, when the air stream strikes the nose of the fender, the air is directed across the concave surface and into the quadrant and across the lower surface. The flow of the air through the openings for the blades 32a, 32b and 32c prevents the spray from flowing through the opening which was not the case when flat blades per se were used. Further, the concave surface collects the forwardly cast spray from the rotating tire which collected spray (water) is ultimately carried rearwardly and discharged at the rear of the fender.

The air which is deflected downwardly helps to "lock in" the residual water still adhering to the face of the rotating tire and the underside hook traps the water that is being thrown from the spinning tire.

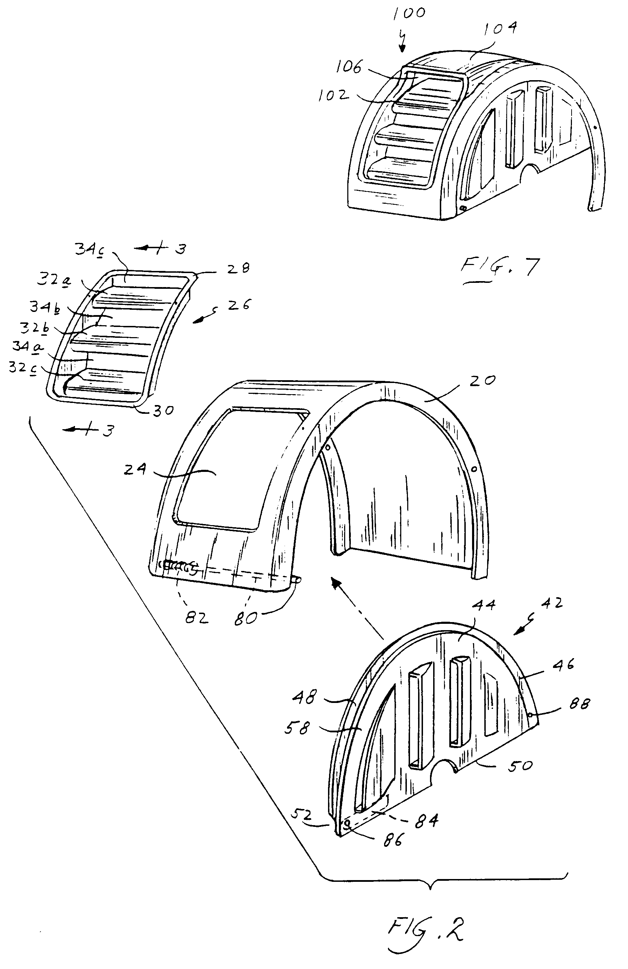

Referring to Fig. 6, the front fender 10 is used in combination with a back fender 10' in a double axle arrangement.

Referring to Fig. 7, a fender 100 is shown. A top blade 102 extends under and is spaced apart from the top section 104 of the fender and defines therewith an air scoop opening 106. The top blade 102 and the top section 104 define a flow path of diminishing cross-sectional area such that air flowing through the scoop is compressed. When the air is discharged, it adiabatically expands resulting in a cooling effect. The direction of discharge is such that the adiabatically expanded cooled air is directed onto and between the rotating tires to assist in cooling of the tires and the brakes of the tires.

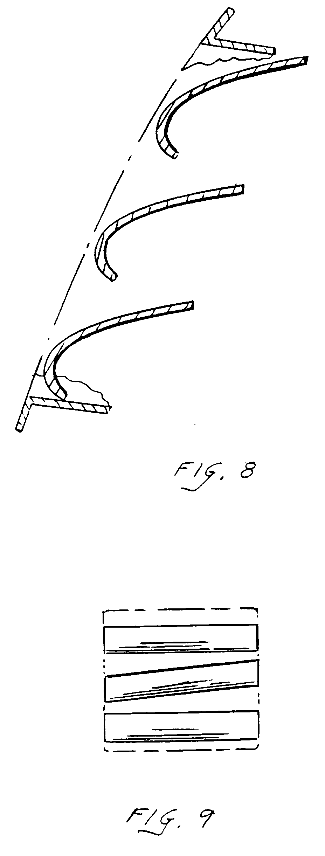

The blades of the air scoop 26 have been shown in a uniform, parallel, spaced apart relationship. The number of blades can vary and the spacing between the blades can be equal (Fig. 8) or non-uniform (Fig. 3). The blades can be adjustable such as by pinning them to the side walls or by positioning them and then bolting them in place. The blades can also be non-parallel with reference to the axis of the rotating wheel (Fig. 9).

Similarly, the slot-like apertures have been shown in spaced apart, parallel relationship and are dimensioned to proportion the flow of air into the control zone to cool the tire and brake assembly. These slots may assume other geometric configurations as long as the air flow is uniformly distributed into the control zone.

Depending upon the specific configuration of the carriage of the trailer, the wheels themselves may be recessed within a well such as with vans or buses. In this situation, it would not only be impractical but would serve no purpose to attempt to insert the whole fender design within the well. In this design, the side wall per se could be used and attached to the well in a manner that 'skirts' where once secured to cover the rear tires of automobiles for aesthetic purposes.

## Claims

1. A fender (10) which comprises a generally planar leading section (12) spaced apart from and extending generally across the leading upper quadrant of a tyre; a plurality of blades (32a, 32b, 32c) formed in the leading section, and spaced apart to define flow passages (34b, 34c) therebetween, the blades comprising outer surfaces (36a, 36b, 36c) and concave inner surfaces (40a, 40b, 40c) spaced apart from the rotating tyre, each blade having a lower part and an upper part,
characterised in that
the outer surfaces (36a, 36b, 36c) have a parabolic shape, defining therebetween flow paths (34b, 34c) of diminishing cross section,
the lower parts of the blades are directed downwards and backwards towards the tyre, and
the upper part of the blades are directed upwards and backwards towards the tyre,
such that spray, cast forwardly from the rotating tyre in the region adjacent the leading section is both directed back toward the tyre and downwardly and collected by the inner surfaces and subsequently discharged.

2. A fender according to claim 1 wherein the blades (32a, 32b, 32c) are spaced apart in uniform parallel relationship.

3. A fender according to claim 1 wherein the blades (32a, 32b, 32c) are spaced apart in parallel non-uniform relationship.

4. A fender according to claim 1 wherein the blades (32a, 32b, 32c) are spaced apart in non-parallel non-uniform relationship.

5. A fender according to claim 3 or claim 4 wherein the flow paths (34b, 34c) increase in size from the upper to the lower portion of the leading section (12).

6. A fender according to any preceding claim which comprises a top section (11) which cooperates with the leading section (12) and is spaced apart from and extends across the top portion of the tyre, and wherein the top blade (32a) extends under and is spaced apart from the top section and defines therewith an air scoop (26), the air scoop comprising a flow passage (34a) of diminishing cross sectional area which results in the adiabatic discharge of the air flowing through the air scoop onto the rotating tyre and associated brake assembly.

7. A fender according to any preceding claim which comprises a trailing portion (16) spaced apart from and extending generally across the trailing upper quadrant of the tyre, whereby at least a portion of the water is discharged downwardly from the trailing portion.

8. A fender according to any preceding claim which comprises first and second fenders (10, 10') arrayed in tandem relationship for a dual axle vehicle.

9. A fender according to any preceding claim in combination with a side shield (42) comprising:
means (48) to maintain the shield in spaced apart relationship from the rotating tyre, the shield lying in a plane substantially perpendicular to the axis of the rotating tyre; and
a plurality of louvres (54, 62, 70) formed in the shield, comprising at least a leading louvre (54) and a trailing louvre (70), the louvres being non-uniformly proportioned such that the rate of the air discharged from the louvres is substantially equal to ensure uniform distribution of air flowing into the tyre and associated brake assembly.

## Patentansprüche

1. Ein Schutzblech (10), das einen im allgemeinen planen Angriffsteil (12) mit Abstand zum Reifen umfaßt und sich im allgemeinen durch den oberen Angriffs-Quadranten eines Reifens erstreckt; mehrere in dem Angriffsbereich angebrachte Lamellen (32a, 32b, 32c), die in Abstand zueinander stehen, um Flußpassagen (34b, 34c) zwischen ihnen zu bestimmen, wobei die Lamellen konkave Außenflächen (36a, 36b, 36c) und Innenflächen (40a, 40b, 40c) aufweisen, die vom sich drehenden Reifen in Abstand stehen, wobei jede Lamelle einen unteren und einen oberen Teil aufweist, die durch die Tatsache characterisiert sind, daß die Außenflächen (36a, 36b, 36c) eine parabolische Form haben, die zwischen ihnen Flußabstände (34b, 34c) bestimmt, deren Querschnitt abnimmt,
die unteren Teile der Lamellen sind nach unten und nach hinten zum Reifen hin gerichtet, und der obere Teil der Lamellen ist nach oben und nach hinten zum Reifen hin,
so daß die Spritzer, die nach vom vom sich drehenden Reifen in dem benachbarten Bereich zum Angriffsteil geleitet werden, nach hinten zum Reifen hin und nach unten geleitet werden und von den Innenflächen aufgefangen und dann abgeleitet werden.

2. Ein Schutzblech nach Antrag 1, bei dem die Lamellen (32a, 32b, 32c) parallel in Abstand zueinander stehen.

3. Ein Schutzblech nach Antrag 1, bei dem die Lamellen (32a, 32b, 32c) parallel in ungleichmäßigen Abständen zueinander stehen.

4. Ein Schutzblech nach Antrag 1, bei dem die Lamellen (32a, 32b, 32c) nicht parallel und in ungleichmäßigen Abständen zueinander stehen.

5. Ein Schutzblech nach Antrag 3 oder Antrag 4, bei dem die Größe der Flußbahmen (34b, 34c) von oben nach unten im Angriffsbereich (12) zunimmt.

6. Ein Schutzblech nach einem der obenstehenden Anträge, das einen oberen Teil (11) umfaßt, der mit dem Angriffsbereich (12) kooperiert, und der von dem oberen Teil des Reifens getrennt ist und sich gleichzeitig durch diesen hindurch erstreckt, und bei dem die obere Lamelle (32a) sich darunter erstreckt und von dem oberen Teil getrennt ist und dort eine Luftmuffe (26) bestimmt, die Luftmuffe umfaßt eine Flußpassage (34a), deren Querschnitt abnimmt, was zu einer adiabatischen Abfuhr der Luft führt, die durch die Luftmuffe auf den sich drehenden Reifen und die Bremsvorrichtung strömt.

7. Ein Schutzblech nach einem der obenstehenden Anträge, das einen hinteren Teil (16) umfaßt, der in Abstand zu dem oberen hinteren Quadranten des Reifens steht und sich im allgemeinen durch ihn hindurch erstreckt, über den zumindest ein Teil des Wassers von dem hinteren Teil nach unten abgeführt wird.

8. Ein Schutzblech nach einem der obenstehenden Anträge, das ein erstes und ein zweites Schutzblech (10 et 10') umfaßt, die als Tandem bei einem Fahrzeug mit doppelter Achse angebracht sind.

9. Ein Schutzblech nach einem der obenstehenden Anträge in Kombination mit einem seitlichen Schutz (42), der umfaßt:
Mittel (48), um den Schutz in Abstand zum sich drehenden Reifen zu halten, wobei der Schutz senkrecht zur Achse des sich drehenden Reifens angebracht ist; und
mehrere Schlitze (54, 62, 70) in dem Schutz, die zumindest einen Angriffsschlitz (54) und einen hinteren Schlitz (70) umfassen, wobei die Schlitze nicht von gleichmäßiger Größe sind, damit die Luftmengen, die durch die Schlitze abgeleitet werden, gleich sind, um eine gleichmäßige Verteilung der Luft zu gewährleisten, die auf den Reifen und die dazugehörige Bremsvorrichtung strömt.

## Revendications

1. Un garde-boue (10) qui comprend une partie d'attaque généralement plane (12) espacée et s'étendant généralement au travers du quadrant supérieur d'attaque d'un pneumatique ; plusieurs lames (32a, 32b, 32c) formées dans la section d'attaque, et espacées pour définir des passages de flux (34b, 34c) entre elles, les lames comportant des surfaces externes (36a, 36b, 36c) et des surfaces internes concaves (40a, 40b, 40c) espacées du pneumatique en rotation, chaque lame comportant une partie inférieure et une partie supérieure,
caractérisée par le fait que
les surfaces externes (36a, 36b, 36c) ont une forme parabolique, qui définit entre elles des espaces de flux (34b, 34c) dont la section diminue,
les parties inférieures des lames sont dirigées vers le bas et vers l'arrière vers le pneumatique, et la partie supérieure des lames est dirigée vers le haut et vers l'arrière vers le pneumatique, de telle façon que la projection, dirigée vers l'avant à partir du pneumatique en rotation dans la zone a côté à la partie d'attaque est dirigée vers l'arrière vers le pneumatique et vers le bas et recueillie par les surfaces internes puis évacuée.

2. Un garde-boue selon la revendication 1 dans lequel les lames (32a, 32b, 32c) sont espacées de façon parallèle.

3. Un garde-boue selon la revendication 1 dans lequel les lames (32a, 32b, 32c) sont espacées de façon parallèle non uniforme.

4. Un garde-boue selon la revendication 1 dans lequel les lames (32a, 32b, 32c) sont espacées de façon non parallèle non uniforme.

5. Un garde-boue selon la revendication 3 ou la revendication 4 dans lequel la taille des voies de flux (34b, 34c) augmente du haut vers le bas de la section d'attaque (12).

6. Un garde-boue selon l'une des revendications ci-dessus qui comprend une partie supérieure (11) qui coopère avec la section d'attaque (12) et qui est séparée de la partie supérieure du pneumatique tout en s'étendant au travers de celle-ci, et dans lequel la lame supérieure (32a) s'étend au dessous et est séparée de la partie supérieure et y définit un manchon d'air (26), le manchon d'air comprenant un passage de flux (34a) dont la section diminue, ce qui entraîne une évacuation adiabatique de l'air qui passe au travers du manchon d'air sur le pneumatique en rotation et l'ensemble de freinage associé.

7. Un garde-boue selon l'une des revendications ci-dessus qui comprend une partie postérieure (16) espacée et qui s'étend généralement au travers du quadrant supérieur postérieur du pneumatique, par laquelle au moins une partie de l'eau est évacuée vers le bas depuis la partie postérieure.

8. Un garde-boue selon l'une des revendications ci-dessus qui comprend un premier et un second garde-boue (10 et 10') disposés en tandem pour un véhicule à deux essieux.

9. Un garde-boue selon l'une des revendications ci-dessus en combinaison avec une protection latérale (42) qui comprend :
des moyens (48) pour maintenir la protection espacée du pneumatique en rotation, la protection disposée sur un plan perpendiculaire à l'axe du pneumatique en rotation ; et
plusieurs ouïes (54, 62, 70) formées dans la protection, comprenant au moins une ouïe d'attaque (54) et une ouïe arrière (70), les ouïes n'étant pas de taille uniforme afin que le débit d'air qui est évacué par les ouïes soit égal pour assurer une répartition uniforme de l'air qui s'écoule sur le pneumatique et dans l'ensemble de freinage associé.
